# EUROPÄISCHE PATENTSCHRIFT

(11) **EP 0 934 179 B1**
(45) Veröffentlichungstag und Bekanntmachung des Hinweises auf die Patenterteilung: **14.03.2001**
(21) Anmeldenummer: 97945757.9
(22) Anmeldetag: 17.10.1997
(51) Int. Cl.: B60R 13/00

(54) **VERFAHREN ZUR HERSTELLUNG EINES VERKLEIDUNGSTEILS, INSBESONDERE FÜR BLECHTRAGTEILE VON KRAFTFAHRZEUGEN**
PROCESS OF MANUFACTURING OF A LINING COMPONENT, ESPECIALLY FOR MOTOR VEHICLE SUPPORTING MEMBERS MADE OF SHEET METAL
PROCEDE DE FABRICATION D'UN ELEMENT D'HABILLAGE, NOTAMMENT POUR PARTIES DE SUPPORT EN TOLE DANS DES VEHICULES AUTOMOBILES

(30) Priorität: 31.10.1996 DE 19644075
(43) Veröffentlichungstag der Anmeldung: 11.08.1999
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9702383
(87) Internationale Veröffentlichungsnummer: WO9818655

(56) Entgegenhaltungen:
- EP-A- 0 611 778
- GB-A- 2 114 047
- US-A- 4 657 938
- US-A- 4 680 316

## Beschreibung

Die Erfindung betrifft ein Verfahren zur Herstellung eines Verkleidungteils zur Energieabsorption, insbesondere für Blechtragteile von Kraftfahrzeugen, bei dem in den Hohlraum eines Hohlprofils eine aufschäumbare Masse eingebracht wird.

Ein derartiges Verfahren ist z.B. aus der US-A-47 86 540 bekannt.

Die GB-A-21 14 047 beschreibt darüber hinaus ein mit einer harten Außenfläche versehenes, für Automobile vorgesehenes Preßteil mit einem elastischen Schaumkern. Durch Zugabe eines Schaummittels zu einer Kunstharzverbindung, Durchkneten des Schaummittels und des Kunstharzmaterials und Formgebung wird ein vorgeformtes, an den Hohlraum angepaßtes und im wesentlichen festes Formteil hergestellt, in eine Gießform eingebracht und durch Hochfrequenzerwärmung aufgeschäumt.

Bei Verkleidungsteilen mit in einer komplizierten Gestalt ausgebildeten und engen Hohlraumquerschnitten, zum Beispiel mit schmalen Kanälen oder Hinterschneidungen, bereitet es bei den bekannten Verfahren Schwierigkeiten, alle Teile des Hohlkörpers vollständig mit Schaumstoff auszufüllen, um so an jeder Stelle eine stoßabsorbierende Wirkung des Verkleidungsteils zu gewährleisten.

Der Erfindung liegt daher die Aufgabe zugrunde, ein Verfahren zur Herstellung eines mit einem Schaumstoff gefüllten Verkleidungsteils anzugeben, das auf einfache Weise auch bei komplizierten, engen Hohlraumquerschnitten ein vollständiges Ausfüllen aller Hohlraumbereiche mit Schaumstoff gestattet.

Erfindungsgemäß wird die Aufgabe bei einem Verfahren gemäß dem Oberbegriff des Anspruchs 1 in der Weise gelöst, daß die aufschäumbare Masse in Pulverform, in Körnerform oder in streichfähiger Konsistenz in den Hohlraum eingebracht und anschließend durch Energiezufuhr aufgeschäumt wird.

Durch das Einbringen der aufschäumbaren Masse in dieser fließfähigen Form kann diese zunächst in allen, auch engen und verwinkelten Bereichen des Hohlraums verteilt werden, um bei der anschließenden Wärmezufuhr den Hohlkörper vollständig mit Schaumstoff auszufüllen. Damit ist die gewünschte stoßabsorbierende Wirkung auch bei sehr kompliziert gestalteten oder flach bzw. teilweise abgeflacht ausgebildeten Hohlkörpern gewährleistet.

Es besteht die Möglichkeit, daß die zum Aufschäumen erforderliche Energiezufuhr direkt oder indirekt durch Wärme-Hochfrequenz- oder Mikrowellenenergie erfolgt.

Vorteilhafterweise findet als schäumbare Masse ein teilkristallines olefinisches Co-Polymer Verwendung.

## Patentansprüche

1. Verfahren zur Herstellung eines Verkleidungsteils zur Energieabsorption, insbesondere für Blechtragteile von Kraftfahrzeugen, bei dem in den Hohlraum eines Hohlprofils eine aufschäumbare Masse eingebracht wird, dadurch gekennzeichnet, daß die aufschäumbare Masse in Pulverform oder in Körnerform oder in streichförmiger Konsistenz in den Hohlraum eingebracht, und anschließend durch Energiezufuhr aufgeschäumt wird.

2. Verfahren nach Anspruch 1, dadurch gekennzeichnet, daß die Energiezufuhr direkt oder indirekt durch Wärme-Hochfrequenz- oder Mikrowellenenergie erfolgt.

## Claims

1. Method of producing a covering member for energy absorption, particularly for sheet metal support parts of motor vehicles, in which a foamable mass is introduced into the cavity of a hollow profile member, characterised in that the foamable mass is introduced in powder form or granular form or in brushable consistency into the cavity and subsequently foamed by feed of energy.

2. Method according to claim 1, characterised in that the energy feed is carried out directly or indirectly by heat energy, high-frequency energy or microwave energy.

## Revendications

1. Procédé de fabrication d'une pièce d'habillage pour absorber de l'énergie, notamment une pièce de support en tôle de véhicule automobile, selon lequel on introduit une masse de matière expansible dans la cavité d'un profilé creux,
caractérisé en ce qu'
on introduit la masse de matière expansible à l'état de poudre ou avec une consistance lui permettant d'être étalée dans la cavité, et on produit l'expansion par un apport d'énergie.

2. Procédé selon la revendication 1,
caractérisé en ce que
l'apport d'énergie se fait de manière directe ou indirecte par de l'énergie calorifique engendrée à haute fréquence ou par des micro-ondes.
